# EUROPÄISCHE PATENTSCHRIFT

(11) **EP 3 334 242 B1**
(45) Veröffentlichungstag und Bekanntmachung des Hinweises auf die Patenterteilung: **01.01.2020**
(21) Anmeldenummer: 17154764.9
(22) Anmeldetag: 06.02.2017
(51) Int. Cl.: H05B 3/24, B60H 1/22, F24H 3/04, F24H 9/18, H05B 1/02, F24H 1/00, F24H 1/12, F24H 9/20, H05B 3/14, F24H 1/10, H05B 3/02, H05B 3/04, H05B 3/06

(54) **ELEKTRISCHE HEIZVORRICHTUNG**
ELECTRIC HEATING DEVICE
DISPOSITIF DE CHAUFFAGE ÉLECTRIQUE

(30) Priorität: 06.12.2016 DE 102016224296
(43) Veröffentlichungstag der Anmeldung: 13.06.2018
(60) Teilanmeldung: 19193023.9
(73) Patentinhaber: Eberspächer catem GmbH & Co. KG, 76863 Herxheim (DE)
(72) Erfinder: Bohlender, Franz, 76870 Kandel (DE); Schwarzer, Andreas, 60433 Frankfurt am Main (DE); Niederer, Michael, 76889 Kapellen-Drusweiler (DE)
(74) Vertreter: Grünecker Patent- und Rechtsanwälte PartG mbB

(56) Entgegenhaltungen:
- EP-A1- 2 607 121
- EP-A1- 2 884 817
- DE-U1-202009 009 942

## Beschreibung

Die vorliegende Erfindung betrifft eine elektrische Heizvorrichtung mit einem Gehäuse, das Ein- und Auslassöffnungen für das zu erwärmende Fluid und eine Zirkulationskammer sowie eine von der Zirkulationskammer durch eine bevorzugt fluiddichte Trennwand getrennte Anschlusskammer ausbildet. In der Zirkulationskammer liegt eine wärmeabgebende Fläche eines PTC-Heizelementes frei. Diese wärmeabgebende Fläche ist wärmeleitend mit einem PTC-Element gekoppelt. Das PTC-Element ist mit elektrischen Leiterbahnen zu unterschiedlichen Polaritäten elektrisch leitend kontaktiert, die in der Anschlusskammer elektrisch angeschlossen sind.

Eine solche elektrische Heizvorrichtung kann gemäß EP 1 768 459 A1 ausgebildet sein und als elektrische Heizvorrichtung zur Lufterwärmung zum Einsatz kommen. Sie kann aber insbesondere als Flüssigkeitsheizer ausgebildet sein, wie dies beispielsweise aus der EP 1 872 986 A1 bekannt ist. Bei diesem Stand der Technik ragen Heizrippen in die Zirkulationskammer hinein, welche von dem zu erwärmenden flüssigen Fluid durchströmt ist. Die Heizrippen bilden eine U-förmige Tasche aus, in welcher das PTC-Element sowie die Leiterbahnen und jeweils außenseitig an den Leiterbahnen Isolierschichten aufgenommen sind. Dadurch sind die PTC-Elemente und die zur Bestromung beidseitig daran anliegenden Leiterbahnen elektrisch isolierend in der Heizrippe aufgenommen. Dabei bestehen die Heizrippe und die Trennwand aus Metall. Durch die die Heizrippe bildenden Wandungen wird die von dem PTC-Element erzeugte Wärme nach außen an die Außenfläche der Heizrippe geleitet und dort an das zu erwärmende flüssige Medium abgegeben.

Die vorliegende Erfindung betrifft insbesondere eine elektrische Heizvorrichtung für die Beheizung eines Kraftfahrzeuges, insbesondere eines Personenkraftwagens. Die elektrische Heizvorrichtung ist dementsprechend ein Bauteil, welches sich wirtschaftlich herstellen lassen muss. Des Weiteren ist grundsätzlich bei Einbauteilen für Kraftfahrzeuge darauf zu achten, dass die Einbauteile gewichtsoptimiert ausgebildet sind. Mit Blick darauf schlägt die ebenfalls als gattungsgemäß anzusehende EP 2 797 381 A1 bzw. EP 2 884 817 A1 eine elektrische Heizvorrichtung mit einem Gehäuse vor, welches einen die Trennwand ausbildenden Gehäusedeckel umfasst, der als Aluminium-Druckgussbauteil hergestellt ist und dichtend auf ein Gehäuseunterteil aufgesetzt ist, welches die Zirkulationskammer umfänglich umgibt und welches als spritzgegossenes Kunststoffteil ausgebildet und damit im Gewicht reduziert ist.

Die zuletzt diskutierte Lösung lässt sich zwar wirtschaftlicher herstellen und ist auch gegenüber früheren Vorschlägen mit einem reinen Metallgehäuse im Gewicht reduziert. Es bleiben aber insbesondere mit Blick auf die Elektromobilität und den zunehmenden Einsatz von elektrischen Heizvorrichtungen als Flüssigkeitsheizer in den Kraftfahrzeugen noch Wünsche offen.

Die vorliegende Erfindung will eine elektrische Heizvorrichtung angeben, die leicht ist und sich kostengünstig herstellen lässt.

Zur Lösung dieser Aufgabe wird mit der vorliegenden Erfindung eine elektrische Heizvorrichtung mit den Merkmalen von Anspruch 1 vorgeschlagen. Diese elektrische Heizvorrichtung hat ein Gehäuse, welches die Zirkulationskammer und die Anschlusskammer ausbildet, wobei in der Zirkulationskammer das zu erwärmende Fluid strömt und in der Anschlusskammer der elektrische Anschluss des PTC-Heizelementes an den Leistungsstrom erfolgt. Es versteht sich von selbst, dass mehrere PTC-Heizelemente in der Zirkulationskammer vorgesehen sein können. Diese können in an sich bekannter Weise innerhalb der Anschlusskammer über eine elektrisch leitende Platte bzw. Platine zu Heizkreisen gruppiert werden. Diese elektrische leitende Platte oder Platine kann sich durch das Fehlen jeglicher elektronischer Bauteile auszeichnen und dient lediglich der Gruppierung der einzelnen PTC-Elemente zu Heizkreisen. Sie kann insbesondere gemäß EP 2 505 931 A1 ausgebildet sein. Parallel hierzu kann in der Anschlusskammer eine weitere elektrisch leitende Platte oder Platine vorgesehen sein, die mit Bauteilen bestückt sein kann, um den Steuerstrom und/oder den Leistungsstrom zu den einzelnen PTC-Heizelementen zu verarbeiten bzw. zu steuern.

Die vorliegende Erfindung unterscheidet sich dadurch vom Stand der Technik, dass das Gehäuse ein Kunststoffgehäuse ist. Dementsprechend werden die Zirkulationskammer und die Anschlusskammer und die die beiden Kammern trennende Trennwand, die bevorzugt eine fluiddichte Trennwand ist, von Kunststoffwänden ganz überwiegend umgeben. So werden die die Anschlusskammer zumindest umfänglich umgebenden Wandungen, die die Zirkulationskammer umfänglich umgebenden Wandungen und die sich üblicherweise rechtwinklig hierzu erstreckende Trennwand aus Kunststoff ausgebildet. Dieser Teil des Gehäuses kann als einheitlicher Gehäusebasiskörper ausgebildet sein, d.h. als einheitliches Bauteil im Wege des Spritzgießens hergestellt sein. Die Zirkulationskammer und/oder die Anschlusskammer oberseitig abdeckende Deckel können ebenfalls aus Kunststoff hergestellt sein, so dass die Anschlusskammer insgesamt und die Zirkulationskammer insgesamt aus Kunststoffbauteilen ausgebildet und begrenzt ist/sind. Gegebenenfalls können aber auch die Gehäusedeckel aus einem dünnen Metallblech bestehen, welches nur unwesentlich zur Erhöhung des Eigengewichts des Gehäuses beiträgt.

Gemäß der vorliegenden Erfindung ist das Kunststoffgehäuse ferner mit einer Abschirmung versehen. Diese Abschirmung umschließt das Gehäuse im Wesentlichen vollumfänglich, um einen wirksamen EMV-Schutz für die elektrische Heizvorrichtung zu schaffen. So führen die in der elektrischen Heizvorrichtung durchgeführten Schaltungsvorgänge zu keinen erheblichen elektromagnetischen Störungen innerhalb des Fahrzeuges.

Die Abschirmung ist bevorzugt mit einem Masseanschluss versehen. Dieser Masseanschluss ist gegenständlich ausgebildet, beispielsweise in Form eines Steckkontaktelementes oder eines Befestigungsauges. Über diesen Masseanschluss ist die elektrische Heizvorrichtung nach Einbau in das Fahrzeug an den Massepol des Fahrzeuges anschließbar. Der Masseanschluss liegt üblicherweise außen an dem Gehäuse frei. Er kann auch Teil der Befestigung des Gehäuses an dem Fahrzeug sein, so dass der Masseanschluss verwirklicht wird, wenn ein Befestigungsbolzen oder eine -schraube mit dem Gehäuse der elektrischen Heizvorrichtung verbunden wird, um die elektrische Heizvorrichtung an dem Fahrzeug zu montieren.

Das Kunststoffgehäuse kann von einem Massewächter-Anschluss durchsetzt sein, der beispielsweise in die Zirkulationskammer hineinragt, um zu überprüfen, ob die elektrische Isolierung des PTC-Heizelementes innerhalb der Zirkulationskammer funktionsfähig ist. Ein solcher Massewächter kann als Anschlussbolzen an der Außenseite des Gehäuses der elektrischen Heizvorrichtung freiliegen. Der Massewächter kann beispielsweise in Verbindung mit einem Befestigungsauge vorgesehen sein, über den die elektrische Heizvorrichtung an einem Kraftfahrzeug montiert und befestigt wird. Der Masseanschluss ist üblicherweise elektrisch mit der Abschirmung des Gehäuses gekoppelt. Ein Massewächter-Anschluss hat keine der elektrischen Versorgung der PTC-Elemente dienende Funktion. Er überprüft allein die elektrische Isolierung des PTC-Elementes gegenüber dem Gehäuse bzw. dem zu erwärmenden Fluid.

Der Massewächter kann innerhalb des Gehäuses mit dem zuvor erwähnten Masseanschluss elektrisch leitend verbunden sein. Der Leitungsweg kann beispielsweise über die Abschirmung des Gehäuses erfolgen.

Zusätzlich zu der Anschlusskammer kann durch das Kunststoffgehäuse eine Steuerkammer ausgebildet sein, in der eine Steuervorrichtung aufgenommen ist. Diese in baulicher Einheit mit dem eigentlichen Heizungsteil vorgesehene Steuervorrichtung ist steuerungsmäßig mit dem PTC-Heizelement gekoppelt. Üblicherweise ist eine elektrische Verbindung beispielsweise in Form eines Steckkontaktes zwischen einer die Heizkreise bildenden leitenden Platte und einer Leiterplatte der Steuervorrichtung vorgesehen. Eine solche elektrische Verbindung kann beispielsweise durch eine Stromschiene gebildet sein, die durch Umspritzen dichtend in der Wand des Kunststoffgehäuses aufgenommen ist. Dabei wird das Kunststoffgehäuse bevorzugt aus einem vernetzenden Kunststoff, insbesondere einem Duroplasten gebildet. Das Kunststoffgehäuse ist also vorzugsweise nicht aus einem Thermoplasten geformt. Ein vernetzender Kunststoff bietet in besonderer Weise die Möglichkeit, die Stromschiene dichtend in der Wand des Kunststoffgehäuses aufzunehmen. Die von der Stromschiene durchsetzte Wand kann auch durch die Trennwand gebildet sein, um beispielsweise ein oder mehrere PTC-Heizelemente innerhalb der Zirkulationskammer elektrisch anzuschließen. Gemäß einer bevorzugten Weiterbildung der vorliegenden Erfindung nimmt das Gehäuse eine Steuervorrichtung in sich auf, die von der Abschirmung umfänglich umgeben ist.

Alternativ kann die Abschirmung auch durch ein das Kunststoffgehäuse außenseitig umgebendes Metallgehäuse gebildet sein. Dieses Metallgehäuse kann zur Gewichtsreduktion aus einem Gittermaterial bestehen. Alternativ kann auch ein durchgehendes Blech das Metallgehäuse ausbilden.

Dieses Metallgehäuse ist bevorzugt aus zumindest zwei Schalenelementen gebildet, die zwischen sich die Ein- und Auslassöffnung bildende Ein- und Auslassstutzen des Gehäuses aufnehmen.

Das Metallgehäuse kann Ausnehmungen aufweisen, durch welche Befestigungsvorsprünge die Außenfläche des Metallgehäuses überragen, wobei diese Befestigungsvorsprünge durch das Kunststoffgehäuse ausgebildet sind und der Befestigung der elektrischen Heizvorrichtung an dem Fahrzeug dienen, um beispielsweise Befestigungsbolzen oder -schrauben in sich aufzunehmen.

Das Gehäuse kann ein aus Kunststoff gebildetes Gehäusebasisteil aufweisen, das die Trennwand und Wandungen ausformt, die die Zirkulationskammer und die Anschlusskammer umfänglich umgeben. Dieses Gehäusebasisteil ist als einteiliges Bauteil ausgebildet. Es bildet die Basis des Gehäuses, welches aus Kunststoff, vorzugsweise vollständig aus Kunststoff ausgebildet ist. Durch das Gehäusebasisteil werden im Grunde die Zirkulationskammer und die Anschlusskammer definiert. Lediglich endseitige Deckel müssen auf das Gehäusebasisteil aufgesetzt werden, um einerseits die Zirkulationskammer und andererseits die Anschlusskammer vollständig abzuschließen. Das Gehäusebasisteil bildet ferner die Ein- und Auslassöffnungen zu der Zirkulationskammer aus, besonders bevorzugt in Form von Anschlussstutzen für den Anschluss eines Flüssigkeitsschlauches oder -rohres.

In eine Querschnittsansicht ist das Gehäusebasisteil bevorzugt H-förmig ausgebildet, wobei der Quersteg des H durch die Trennwand gebildet ist, die auf einer Seite die Anschlusskammer und auf der anderen Seite die Zirkulationskammer vorgibt. Von dem Gehäusebasisteil kann ferner eine im Wesentlichen rechtwinklig von der Trennwand abragende Teilung ausgebildet sein, die die Zirkulationskammer in eine Einlasszirkulationskammer und eine Auslasszirkulationskammer teilt. Durch die Teilung sind zwei Heizkammern innerhalb der Zirkulationskammer ausgebildet, in denen sich jeweils zumindest ein PTC-Element befindet, wobei eine der Heizkammern mit der Einlassöffnung und die andere der Heizkammern mit der Auslassöffnung unmittelbar kommuniziert. Dazwischen ist üblicherweise ein Verbindungskanal vorgesehen. Dieser kann durch eine sich rechtwinklig zu der Trennwand und sich rechtwinklig zu der Teilung erstreckende Kanalwand ausgebildet sein, die ebenfalls als Teil der Gehäusebasis ausgeformt ist. Die Teilung und die Kanalwandung können durch korrespondierende Wandsegmente fortgesetzt sein, die durch einen die Zirkulationskammer abdeckenden Gehäusedeckel ausgebildet sein können. Ein solcher Gehäusedeckel liegt aber üblicherweise mit seiner Außenumfangsfläche unmittelbar auf den die Zirkulationskammer umgebenden und durch die Gehäusebasis gebildeten Wandungen auf.

Die vorliegende Erfindung bietet mithin die Möglichkeit, durch das Gehäusebasisteil das zentrale Element der Heizvorrichtung als einteiliges Bauteil auszuformen. Das Gehäusebasisteil kann dabei innerhalb der Trennwand Steckaufnahmen für das dichtende Anordnen von PTC-Heizelementen ausbilden, die zunächst durch Aufstecken an der Trennwand befestigt werden.

Die erfindungsgemäße Heizvorrichtung hat auch eine Steuerkammer zur Aufnahme einer Steuervorrichtung, die bevorzugt in baulicher Einheit mit dem Leistungsteil der elektrischen Heizvorrichtung ausgebildet ist. Der Leistungsteil wird dabei insbesondere durch die Zirkulationskammer und die hierin aufgenommenen PTC-Heizelemente gebildet. Diese Steuerkammer kann zusammen mit der Anschlusskammer ausgebildet sein. In diesem Fall hat die elektrische Heizvorrichtung lediglich zwei Kammern. Alternativ kann die Steuerkammer auch als separate Kammer zu der Anschlusskammer ausgebildet sein. In diesem Fall nimmt die Anschlusskammer beispielsweise lediglich elektrisch leitende Platten oder Platinen auf, die der Gruppierung von einzelnen PTC-Heizelementen zu einem Heizkreis dienen. Eine mit elektronischen Bauteilen bestückte Leiterplatte nimmt die Anschlusskammer dann nicht auf. Eine solche Leiterplatte ist in der separat hierzu vorgesehenen Steuerkammer vorgesehen. Diese Steuerkammer wird durch das Gehäuse ausgebildet. Gemäß einer bevorzugten Weiterbildung der vorliegenden Erfindung bildet das Gehäusebasisteil auch die die Steuerkammer umfänglich umgebenden Wandungen aus. Bei dieser bevorzugten Weiterbildung sind somit zumindest drei unterschiedliche Kammern, denen jeweils eine bestimmte Funktion zukommt, nämlich einerseits das Heizen des zu erwärmenden bevorzugt flüssigen Fluids (Zirkulationskammer), das Gruppieren der PTC-Heizelemente zu Heizkreisen (Anschlusskammer) und schließlich das Verarbeiten bzw. Steuern von Steuersignalen und Leistungsstrom (Steuerkammer).

Das Gehäusebasisteil ist bevorzugt aus einem vernetzenden Kunststoff ausgebildet, also keinem Thermoplasten, sondern beispielsweise einem Duroplasten. Die Auswahl dieses Materials führt zu einem besonderen technischen Effekt, sofern zwischen zwei unterschiedlichen Kammern der elektrischen Heizvorrichtung eine Stromschiene sich erstreckend vorgesehen ist, die mittels Umspritzen in den Gehäusebasisteil aufgenommen ist. Dabei ist die Stromschiene durch das Umspritzen abgedichtet in dem Gehäusebasisteil aufgenommen, d. h. in einer Wand, die eine Anschlusskammer von der anderen Anschlusskammer trennt. Die Stromschiene bildet bevorzugt an sich gegenüberliegenden Enden Kontaktzungen für das Aufstecken einer leitenden Platte oder Platine aus. Dadurch können elektrische Leiterbahnen beispielsweise einer Leiterplatte oder einer elektrisch leitenden Platte durch Aufsetzen auf einfache Weise mit der Stromschiene steckverbunden werden. Es hat sich herausgestellt, dass Duroplasten beim Umspritzen einen innigen und abdichtenden Verbund mit der Stromschiene bewirken.

Die entsprechende Wand kann durch die Trennwand zwischen der Zirkulationskammer und der Anschlusskammer gebildet sein. Sie kann aber auch durch eine Wand gebildet sein, die sich zwischen der Anschlusskammer und der Steuerkammer erstreckt.

Eine solche Wand wird bevorzugt als Steuerkammerboden durch die Gehäusebasis ausgebildet. Ein solcher Steuerkammerboden hat bevorzugt eine Durchgangsöffnung, in der ein Kühlkörper dichtend eingesetzt ist. Der Kühlkörper ist mit seinem einen Ende wärmeleitend mit der Zirkulationskammer gekoppelt und mit seinem anderen Ende innerhalb der Steuerkammer mit einem Verlustleistung erzeugenden Bauteil der Steuervorrichtung. Der Kühlkörper kann gänzlich aus Metall, beispielsweise Aluminium oder Kupfer ausgebildet sein. Für den Fall, dass die Steuerkammer identisch mit der Anschlusskammer ist, entspricht der hier erwähnte Steuerkammerboden der zwischen der Zirkulationskammer und der Anschlusskammer vorgesehenen Trennwand, die in diesem Fall mit der Durchgangsöffnung versehen ist.

Gemäß einer bevorzugten Weiterbildung der vorliegenden Erfindung liegt der Kühlkörper in einem Kühlkanal der Zirkulationskammer frei. Dieser Kühlkanal der zuvor bereits erwähnte Verbindungskanal innerhalb der Zirkulationskammer sein, der durch eine Kanalwand von der Heizkammer abgeteilt ist. Das Anordnen des zu kühlenden Endes des Kühlkörpers hinter der Kanalwand führt zu einer Strahlungsabschirmung zwischen dem Kühlkörper und dem in der Zirkulationskammer vorgesehenen PTC-Heizelement. So wird der Kühlkörper nicht unmittelbar mit der von dem PTC-Heizelement abgegebenen Strahlungswärme beaufschlagt. Mit dieser Formulierung soll zum Ausdruck gebracht werden, dass das zu kühlende Ende des Kühlkörpers zwar in der Zirkulationskammer freiliegt, allerdings kein PTC-Element "sieht".

Der Kühlkörper ist bevorzugt über einen Bajonettverschluss in der Durchgangsöffnung gehalten. Dabei kann der Kühlkörper als im Wesentlichen zylindrisches Bauteil ausgebildet sein, der an gegenüberliegenden Umfangssegmenten von Verriegelungsvorsprüngen überragt ist, die nach dem Fügen des Bajonettverschlusses in der Regel an einer der die Zirkulationskammer umfänglich umgebenden Wandungen anliegen, wodurch das Kühlelement verriegelt ist. Es versteht sich von selbst, dass die Durchgangsöffnung mit axial verlaufenden Nuten versehen sein muss, die zur Durchführung der Verriegelungsvorsprünge geeignet ausgebildet sind, wie dies bei einem Bajonettverschluss üblich ist. Zum Fügen des Kühlkörpers wird dieser üblicherweise von der Steuerkammerseite in Richtung auf die Zirkulationskammer eingeschoben, üblicherweise unter Mitnahme und Einschluss eines Dichtungselementes, beispielsweise in Form eines Dichtringes, welches den Kühlkörper gegenüber der die Durchgangsöffnung begrenzenden Wandung abdichtet. An seiner der Zirkulationskammer abgewandten Seite hat der Kühlkörper üblicherweise einen Kragen, der an einem die Durchgangsöffnung steuerseitig begrenzenden Rand anliegt.

Bei der zuvor diskutierten Weiterbildung mit einer Zirkulationskammer, einer Anschlusskammer und einer Steuerkammer, wobei Anschlusskammer und Steuerkammer voneinander getrennt vorgesehen sind, bildet das Gehäusebasisteil bevorzugt eine erste Kunststoffwanne aus, die die Umfangsflächen der Zirkulationskammer ausbildet, eine zweite Kunststoffwanne, die die Umfangsflächen der Anschlusskammer ausbildet, und eine dritte Kunststoffwanne, die die Umfangsflächen der Steuerkammer ausbildet. Wie bereits erwähnt, teilen sich üblicherweise die erste und die zweite Kunststoffwanne einen Boden, der durch die Trennwand gebildet ist. So sind die erste und die zweite Kunststoffwanne zu gegenüberliegenden Seiten hin offen und durch die Trennwand voneinander getrennt. Die dritte Kunststoffwanne erstreckt sich dabei rechtwinklig zu der ersten und der zweiten Kunststoffwanne. Dementsprechend ist die Haupterstreckungsrichtung eines die dritte Kunststoffwanne abdeckenden Gehäusedeckels rechtwinklig zu der Haupterstreckungsrichtung der Gehäusedeckel, die die erste und die zweite Kunststoffwanne abdecken. Der Boden der dritten Kunststoffwanne wird dabei üblicherweise durch ein durch das Gehäusebasisteil gebildetes Wandsegment ausgeformt, welches eine Umfangswand der Anschlusskammer und eine Umfangswand der Zirkulationskammer üblicherweise in gradliniger Verlängerung ausbildet.

Jeder der zuvor erwähnten Gehäusedeckel zu der Anschlusskammer, der Zirkulationskammer bzw. der Steuerkammer ist bevorzugt aus Kunststoff, besonders bevorzugt aus Duroplast ausgebildet. Zur dichten Verbindung zwischen den jeweiligen Gehäusedeckel und dem Gehäusebasisteil sind die die Anschlusskammer, die Zirkulationskammer und/oder die Steuerkammer umfänglich umgebenden Wandungen stirnseitig mit einer umlaufenden Nut versehen. In diese Nut wird vor dem Fügen des jeweiligen Gehäusedeckels ein Kleber, insbesondere ein Epoxidkleber eingebracht. Der Gehäusedeckel hat einen umlaufenden Kranz, der in die umlaufende Nut eingebracht wird und zusammen mit einem weiteren parallel dazu umlaufenden Steg eine Gegennut ausformt, in die üblicherweise ein innerer Steg, der die umlaufende Nut inwärtig begrenzt, eingreift, wonach eine Art Labyrinthdichtung entsteht, die aufgrund der volumetrischen Dosierung des Klebers in die Nut nach dem Andrücken des Gehäusedeckels im Wesentlichen vollständig von Kleber gefüllt ist.

Gemäß einer bevorzugten Weiterbildung der vorliegenden Erfindung ist eine sich zwischen zwei unterschiedlichen Kammer erstreckende Stromschiene vorgesehen, die mittels Umspritzen abgedichtet in dem Gehäusebasisteil aufgenommen ist. Dieses ist insbesondere für diese bevorzugte Ausgestaltung aus einem Duroplasten gebildet. Der Duroplast umschließt und siegelt die Stromschiene innerhalb des Materials ein, so dass zwischen den beiden Kammern entlang der Stromschienenaußenfläche eine sichere Abdichtung gegeben ist.

Eine solche Ausgestaltung kann beispielsweise zwischen der Steuerkammer und der Anschlusskammer einen Steuerboden durchsetzend vorgesehen sein. Ein solcher Steuerkammerboden begrenzt unterseitig die Steuerkammer und bildet eine die Anschlusskammer umfänglich umgebende Wandung aus. Die in dieser Weise vorgesehene Stromschiene ist bei der Weiterbildung der vorliegenden Erfindung als Anschlusselement zwischen einer in der Steuerkammer aufgenommenen Leiterplatte und der Anschlusskammer ausgebildet. Die Stromschiene kann als Steckelement vorgesehen sein und durch Steckkontakte mit der Leiterplatte einerseits und einer innerhalb der Anschlusskammer vorgesehenen leitenden Platte andererseits elektrisch kontaktiert sein. Diese Platte kann gemäß EP 2 505 931 A1 ausgebildet sein. Innerhalb der Anschlusskammer erstreckt sich der durch die Stromschiene ausgebildete Steckkontakt bevorzugt parallel zu Kontaktzungen des PTC-Heizelementes, so dass der Steckkontakt zu dem PTC-Heizelement und der Steckkontakt zu der Stromschiene durch Aufstecken einer elektrisch leitenden Platte in einer vorbestimmten Richtung, üblicherweise durch Einsenken der leitenden Platte in die Anschlusskammer bewirkt werden kann.

Gemäß einer bevorzugten Weiterführung der vorliegenden Erfindung ist der Kühlkörper mittels Umspritzen in dem Gehäuse dichtend aufgenommen. Auch bei dieser Ausgestaltung wird bevorzugt das Gehäuse aus einem Duroplasten gebildet. Der Kühlkörper kann an seiner Außenumfangsfläche einen oder mehrere regelmäßig umfänglich umlaufende Befestigungskragen aufweisen, die zusammen mit dem erstarrten Kunststoff des Gehäuses eine Labyrinthdichtung ausbilden und dementsprechend sowohl die sichere Befestigung des Kühlkörpers in dem Gehäuse wie auch die Dichtigkeit verbessern. Beim Umspritzen kann eine zu der Anschlusskammer weisende Oberfläche des Kühlkörpers von einem das Gehäuse ganz oder teilweise ausbildenden Kunststoff überzogen werden, um eine elektrisch isolierende Anlagefläche für einen Leistungstransistor zu schaffen, der wärmeleitend mit dem Kühlkörper verbunden ist, um die von dem Leistungstransistor erzeugte Verlustleistung an das zu erwärmende Medium innerhalb der Zirkulationskammer abzugeben. Die Isolierung kann als dünner Film einteilig mit dem Gehäuse ausgebildet sein. Dadurch ist das Anordnen einer separaten elektrischen Isolierung zwischen dem Kühlkörper und dem Leistungstransistor entbehrlich. Die Herstellung wird vereinfacht.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine perspektivische Draufsicht auf ein erstes Ausführungsbeispiel eines Gehäuses;
- Figur 2: eine perspektivische Seitenansicht des in Figur 1 gezeigten Ausführungsbeispiels;
- Figur 3: eine in dem ersten Ausführungsbeispiel vorgesehene Abdeckplatte 22 in isolierter Darstellung zusammen mit PTC-Heizelementen;
- Figur 4: die in Figur 3 gezeigte Abdeckplatte beim Bestücken mit einem PTC-Heizelement;
- Figur 5: eine seitliche perspektivische Schnittansicht eines zweiten Ausführungsbeispiels der vorliegenden Erfindung;
- Figur 6: das Detail VI gemäß der Darstellung in Figur 5;
- Figur 7: eine perspektivische Sicht in die Steuerwanne des zweiten Ausführungsbeispiels;
- Figur 8: eine perspektivische Längsschnittansicht entlang der Linie VIII-VIII gemäß der Darstellung in Figur 7;
- Figur 9: eine perspektivische, teilweise aufgebrochene Seitenansicht des zweiten Ausführungsbeispiels mit einer an dem Kunststoffgehäuse vorgesehenen Abschirmung;
- Figur 10: eine perspektivische Seitenansicht von Teilen des PTC-Heizelementes;
- Figur 11: eine teilweise gebrochene perspektivische Seitenansicht des PTC-Heizelementes;
- Figur 12: eine perspektivische Querschnittsansicht des PTC-Heizelementes;
- Figur 13: eine Längsschnittansicht durch die Abdeckplatte gemäß den Figuren 3, 4 mit einem einzelnen darin aufgenommenen PTC-Heizelement;
- Figur 14: eine perspektivische Seitenansicht bei entfernten Gehäusedeckel eines weiteren Ausführungsbeispiels;
- Figur 15: eine Ansicht ähnlich zu Figur 14 ohne Gehäusedeckel des weiteren Ausführungsbeispiels und
- Figur 16: eine perspektivische Schnittansicht durch die Trennwand des weiteren Ausführungsbeispiels.

### 1. Grundsätzlicher Aufbau der Heizvorrichtung

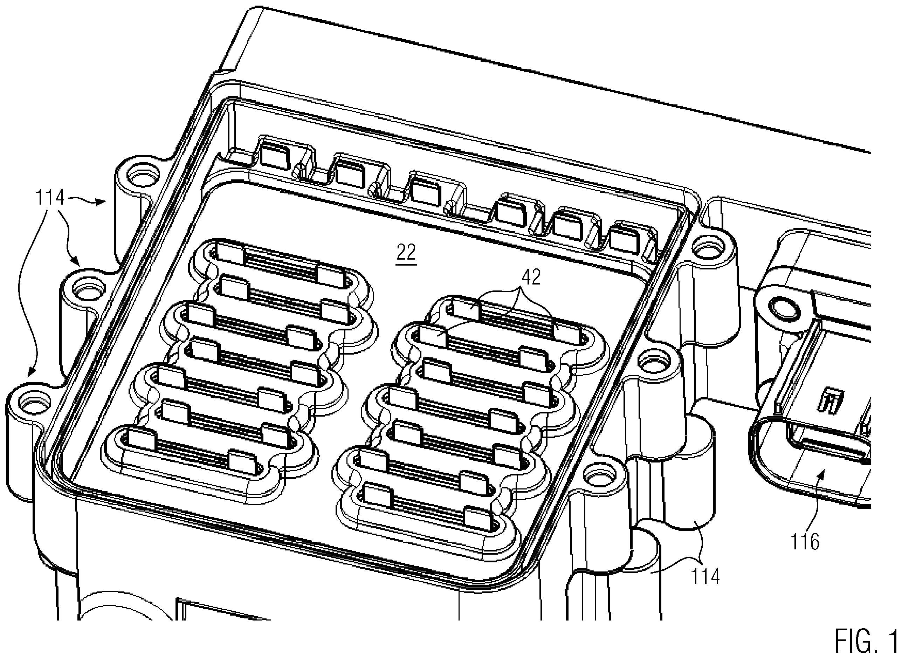

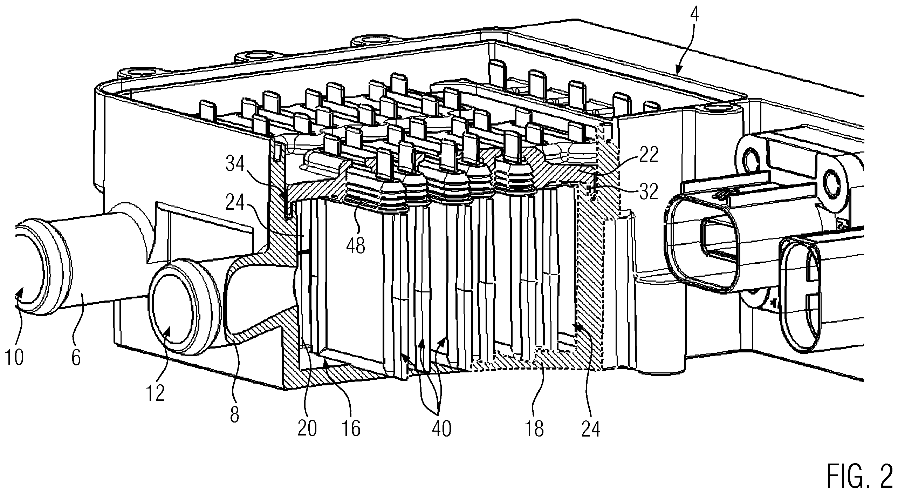

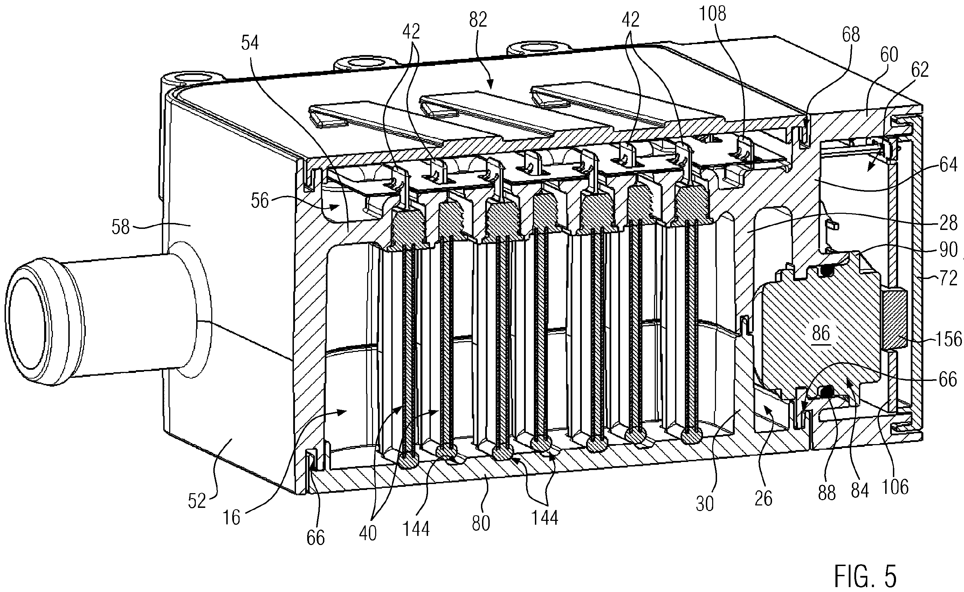

Figur 1 zeigt eine perspektivische Draufsicht auf ein mit Bezugszeichen 2 gekennzeichnetes Gehäuse einer als Wasserheizer ausgebildeten elektrischen Heizvorrichtung. Das Gehäuse 2 hat ein Gehäusewannenelement 4 aus Kunststoff. Dieser Kunststoff ist vorliegend ein Duroplast. Das Gehäuse 2 bildet einen Einlassstutzen 6 und einen Auslassstutzen 8 aus, die vorliegend einteilig an dem Gehäusewannenelement 4 ausgebildet sind. Die Stutzen 6, 8 sind als Schlauchanschlussstutzen ausgebildet und bilden eine Einlassöffnung 10 bzw. eine Auslassöffnung 12 zu einer mit Bezugszeichen 14 gekennzeichneten Zirkulationskammer aus. Die Zirkulationskammer 14 ist in zwei Heizkammern geteilt, von denen in den Figuren 1 und 2 lediglich die in der Darstellung vordere Heizkammer 16 zu erkennen ist. Die Unterteilung der Zirkulationskammer 14 erfolgt durch eine einteilig an dem Gehäusewannenelement 4 ausgebildete und von dessen Boden 18 nach innen abragende Teilungswand 20, die durch eine an einer mit Bezugszeichen 22 gekennzeichneten Abdeckplatte ausgebildete und mit Bezugszeichen 24 gekennzeichnete weitere Teilungswand 24 ihre Fortsetzung findet. An der den beiden Stutzen 6, 8 gegenüberliegenden Seite sind die beiden Heizkammern 16 durch einen Verbindungskanal miteinander verbunden, der in dem zweiten Ausführungsbeispiel eines Gehäuses 2 gemäß Figur 5 zu erkennen und dort mit Bezugszeichen 26 gekennzeichnet ist. Dieser Verbindungskanal 26 wird durch ein Kanalwandsegment 28, welches einteilig an der Abdeckplatte 22 angeformt ist und sich rechtwinklig zu der Teilungswand 20 erstreckt, und ein Kanalwandsegment 30, welches von dem Boden 18 des Gehäusewannenelementes 4 abragt, von der Heizkammer 16 getrennt.

Die Abdeckplatte 22 ist aus Kunststoff hergestellt. Vorliegend ist die Abdeckplatte 22 aus einem Duroplasten gebildet. Grundsätzlich hat die Verwendung von Duroplasten zur Herstellung des Gehäuses 2 oder Teile davon den Vorteil, dass ein Duroplast eine relativ hohe Temperaturbeständigkeit von etwa 150 °C hat und auch bei Temperaturen von -40 °C keine Sprödigkeit zeigt. Damit ergibt sich für ein aus einem Duroplasten ganz oder teilweise gebildeten Gehäuse eine bessere Temperaturbeständigkeit bei Anforderungen, die im Heizbetrieb und beim Betrieb von Fahrzeugen in arktischen Regionen auftreten. Der Duroplast ist aber auch zu bevorzugen gegenüber einem Thermoplasten, da ein Duroplast eine bessere Kriechstrom-Festigkeit als ein Thermoplast hat.

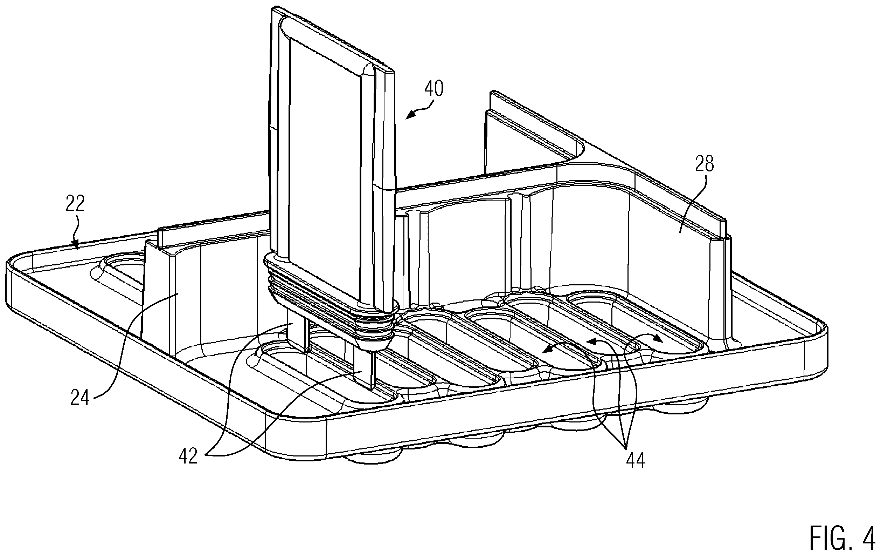

Die Figur 4 zeigt die Abdeckplatte 22 ohne das Gehäusewannenelement 4. Die Abdeckplatte 22 hat einen umlaufenden Rand 32, der mit einer an dem Gehäusewannenelement 4 ausgebildeten umlaufenden Nut 34 zusammenwirkt. Diese Nut 34 ist mit Kleber, vorliegend Epoxidkleber gefüllt, bevor der Rand 32 in die Nut 34 eindringt, um das Abdeckelement 22 mit dem Gehäusewannenelement zu verkleben. In gleicher Weise werden die Segmente 24 bzw. 28 mit den korrespondierenden Wandelementen 20 bzw. 30 des Gehäusewannenelementes 4 gefügt. Danach ist die Zirkulationskammer 14 fluiddicht zwischen dem Boden 18 des Gehäusewannenelementes 4 und dem Abdeckelement 22 und umfänglich umgeben von Wandungen eingeschlossen, die durch das Gehäusewannenelement 4 gebildet sind und die sich rechtwinklig zu dessen Boden 18 erstrecken.

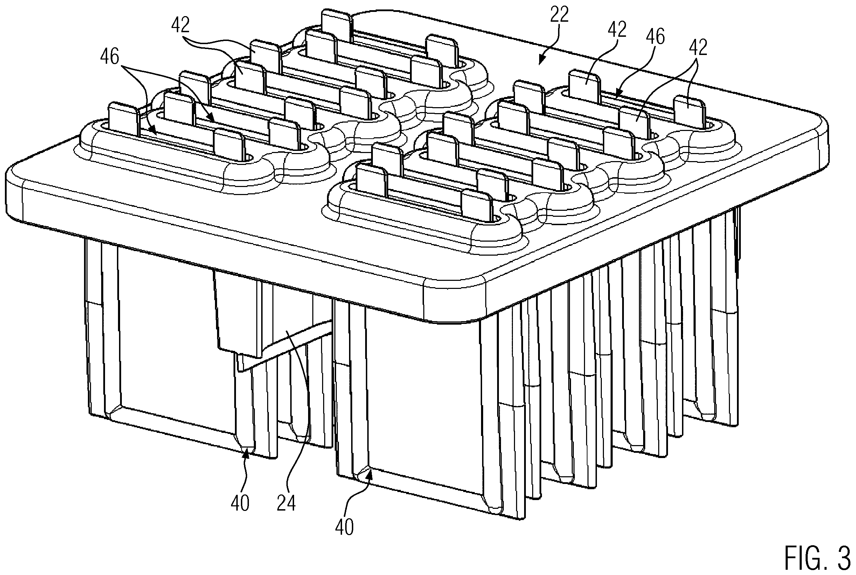

Vor der Montage wird das Abdeckelement 22 in der aus den Figuren 3 und 4 ersichtlichen Weise mit PTC-Heizelementen 40 bestückt. Die PTC-Heizelemente 40 sind dazu anschlussseitig, d.h. dort, wo die PTC-Heizelemente 40 jeweils zwei Kontaktzungen 42 aufweisen, in weibliche Steckelementaufnahmen 44 eingesteckt, die durch die Abdeckplatte 22 einteilig ausgebildet werden. Diese Steckelementaufnahmen 44 sind jeweils endseitig mit einem Längsschlitz 46 versehen, der von den Kontaktzungen 42 durchragt wird (vgl. Figuren 1, 3). Ein Längsschlitz 46 bildet ein Beispiel einer in der Abdeckplatte 22 als Beispiel einer Innenwand ausgesparten Durchtrittsöffnung aus.

Die Figur 4 verdeutlicht das Einstecken des PTC-Heizelementes 40 in die weibliche Steckelementaufnahme 44. Das PTC-Heizelement 40 hat für die beim Einstecken gefügte Steckverbindung einen Dichtkragen 48, der an die Abmessung der Steckelementaufnahme 44 angepasst ausgebildet ist und durch ein Elastomermaterial gebildet ist, welches innerhalb der Steckelementaufnahme 44 dichtend verpresst wird, so dass die Schlitze 46 gegenüber der Zirkulationskammer 14 fluiddicht abgedichtet sind. Darüber hinaus wird durch das Verpressen des den Dichtkragen 48 bildenden Materials das PTC-Heizelement 40 reibschlüssig innerhalb der Steckelementaufnahme 44 gehalten, und zwar auch in Steckrichtung, die der Längserstreckungsrichtung der Kontaktzungen 42 entspricht. In dieser Weise gefügt halten die PTC-Heizelemente 40 an der Abdeckplatte 22, auch wenn diese mit den Steckelementaufnahmen 44 nach unten ausgerichtet ist, wie dies in Figur 3 dargestellt wird.

### 2. Gehäusebasisteil

Die Figur 5 verdeutlicht in einer Schnittansicht das Wesen eines Ausführungsbeispiels eines Gehäusebasisteils, welches mit Bezugszeichen 50 gekennzeichnet ist. Das Gehäusebasisteil 50 bildet mit Bezugszeichen 52 gekennzeichnete Wandungen, die die Zirkulationskammer 16 umfänglich umgeben, d.h. die Heizkammern 16 und den Verbindungskanal 26 umfänglich umgeben. Die bei dem vorher beschriebenen Ausführungsbeispiel als separates Bauteil vorgesehene Abdeckplatte 22 ist vorliegend einteilig durch das Gehäusebasisteil 50 ausgebildet und bildet auch hier - wie bei dem ersten Ausführungsbeispiel - eine Trennwand 54 aus, die die Zirkulationskammer 16 von einer Anschlusskammer 56 trennt, in welcher vorliegend sämtliche Kontaktzungen 42 sämtlicher PTC-Heizelemente 40 freiliegen. Auch mit Bezugszeichen 58 gekennzeichnete und die Anschlusskammer umfänglich umgebende Wandungen werden durch das Gehäusebasisteil 50 ausgebildet. Schließlich werden in Verlängerung der Stutzen 6, 8 und in dieser Richtung hinter der Zirkulationskammer 16 bzw. der Anschlusskammer 56 durch das Gehäusebasisteil 50 Wandungen 60 gebildet, die eine Steuerkammer 62 umfänglich umgeben. Ein mit Bezugszeichen 64 gekennzeichneter Steuerkammerboden, von dem sich die Wandungen 60 erheben, wird teilweise durch eine der Wandungen 52 und eine der Wandungen 58 gebildet. In einer Querschnittsansicht, die parallel zu der Erstreckungsrichtung der Stutzen 6, 8 verläuft, erscheint das Gehäusebasisteil dementsprechend als im Querschnitt H-förmig mit einem einseitig an das H angesetzten U. Das Gehäusebasisteil 50 ist aus Kunststoff und als einheitliches Bauteil ausgebildet. Das Gehäusebasisteil 50 ist vorliegend aus einem Duroplasten gebildet.

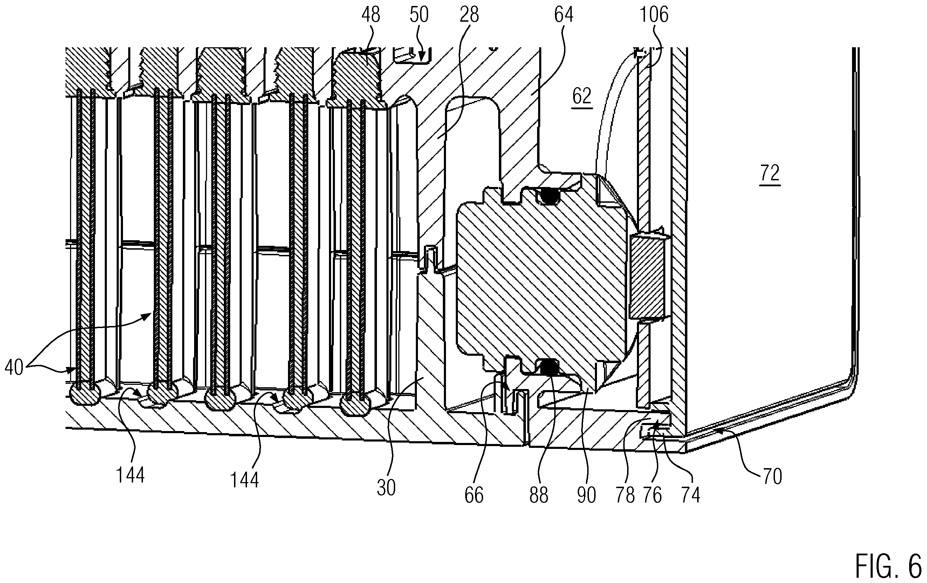

Die Wandungen 52, 58, 60 sind jeweils stirnseitig mit einer umlaufenden Nut 66, 68, 70 versehen. Die Funktion dieser Nuten 66, 68, 70 wird insbesondere durch Figur 6 verdeutlicht. So ist dort ein Abdeckelement 72 zu der Steuerkammer 62 dargestellt, welches als im Wesentlichen ebene Platte mit einem umlaufenden Kranz 74 ausgebildet ist. Dieser Kranz 74 greift in die zugehörige Nut 70 ein und verdrängt dort eingebrachten Kleber (vorliegend Epoxidkleber). Der Kranz 74 bildet einen äußeren Rand einer Gegennut 76, die an dem Abdeckelement 72 ausgeformt und innenseitig durch einen inneren Steg 78 begrenzt ist. Somit ist eine Art Labyrinthdichtung gebildet, in welche verdrängter Kleber eindringen kann, der vor der Montage des Abdeckelementes 72 entweder in die Nut 70 oder die Gegennut 76 eingebracht worden ist. In entsprechender Weise sind die Gehäusedeckel 80 zu der Zirkulationskammer 14 bzw. 82 zu der Anschlusskammer 56 randseitig ausgebildet und an dem Gehäusebasisteil 50 befestigt und dagegen abgedichtet.

Wie ebenfalls Figur 6 verdeutlicht, ist der Steuerkammerboden 64 mit einer Durchgangsöffnung 84 versehen, in die ein Kühlkörper 86 eingebracht ist. Zur Abdichtung der Zirkulationskammer 14 gegenüber der Steuerkammer 62 ist zwischen dem Kühlkörper 86 und der Innenumfangswandung der Durchgangsöffnung 84 ein Dichtring 88 vorgesehen. Der Kühlkörper 86 bildet steuergehäuseseitig einen ringförmigen Anschlag 90 aus, der gegen die stirnseitige Endfläche der Durchgangsöffnung 84 anliegt, die in Richtung auf die Steuerkammer 62 als vorspringender Kragen 92 verlängert und durch das Material des Gehäusebasisteils 50 ausgebildet ist.

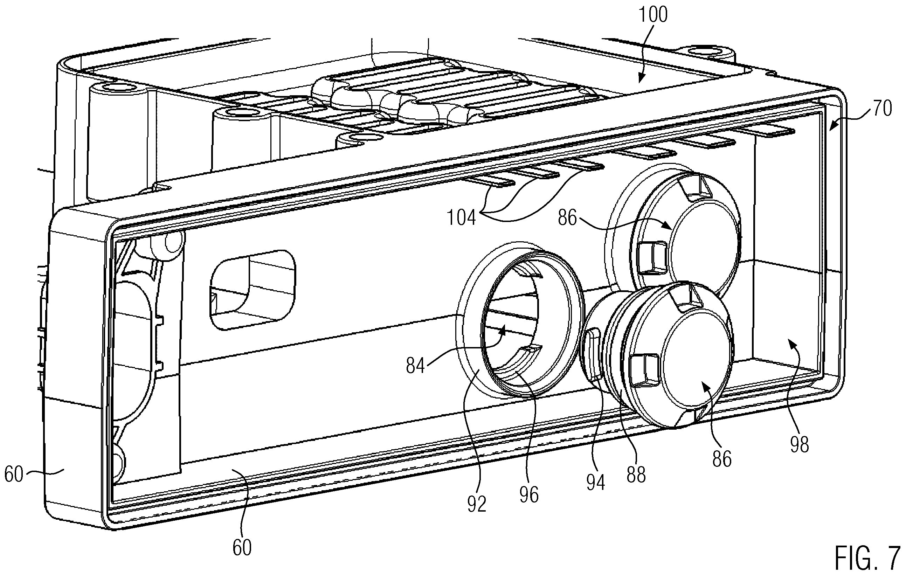

Wie Figur 7 erkennen lässt, wird die zumindest in Richtung auf die Zirkulationskammer 14 im Wesentlichen zylindrisch ausgebildete Außenumfangsfläche des Kühlkörpers 86 an gegenüberliegenden Seiten umfänglich von Verriegelungsvorsprüngen 94 überragt, die mit Verriegelungsnasen 96, die innenumfänglich die im Wesentlichen zylindrische Durchgangsöffnung 84 überragen, zusammenwirken, um einen Bajonettverschluss auszubilden, durch den der Kühlkörper 86 gegenüber dem Gehäusebasisteil 50 festgelegt ist. Der Dichtring 88 kann so ausgebildet sein, dass er diese Verriegelung unter axialer und/oder radialer Vorspannung hält. Zusätzlich kann der Steuerkammerboden 64 benachbart zu der Mündung in die Durchgangsöffnung 84 auf Seiten der Zirkulationskammer 14 mit Mulden versehen sein, in welche die Verriegelungsvorsprünge 94 eingreifen und die den Kühlkörper 86 formschlüssig drehgesichert halten, um ein unbeabsichtigtes Lösen des Bajonettverschlusses 94, 96 zu verhindern.

Die Figur 7 gibt den Blick in eine durch den Steuerkammerboden 64 und die Wandungen 60 gebildete Steuergehäusewanne frei, die im endmontierten Zustand durch das Abdeckelement 72 verschlossen ist.

Die Figur 5 zeigt oberhalb der Trennwand 54 eine durch die Trennwand 54 und die Wandungen 58 gebildete Anschlusswanne 100. Auf der in der Darstellung nach Figur 5 darunterliegenden Seite ist durch das Gehäusebasisteil 50 eine durch die Trennwand 54 und die Wandungen 52 gebildete Zirkulationswanne 102 ausgeformt. So bildet das Gehäusebasisteil 50 im Wesentlichen sämtliche Kammern 14, 56, 52, die lediglich durch die Abdeckelemente 72, 80, 82 abgedeckt werden müssen, um eine funktionsfähige und als Leichtbauteil aus Kunststoff ausgeformte elektrische Heizvorrichtung zu schaffen.

### 3. Dichtend umspritzte Stromschiene

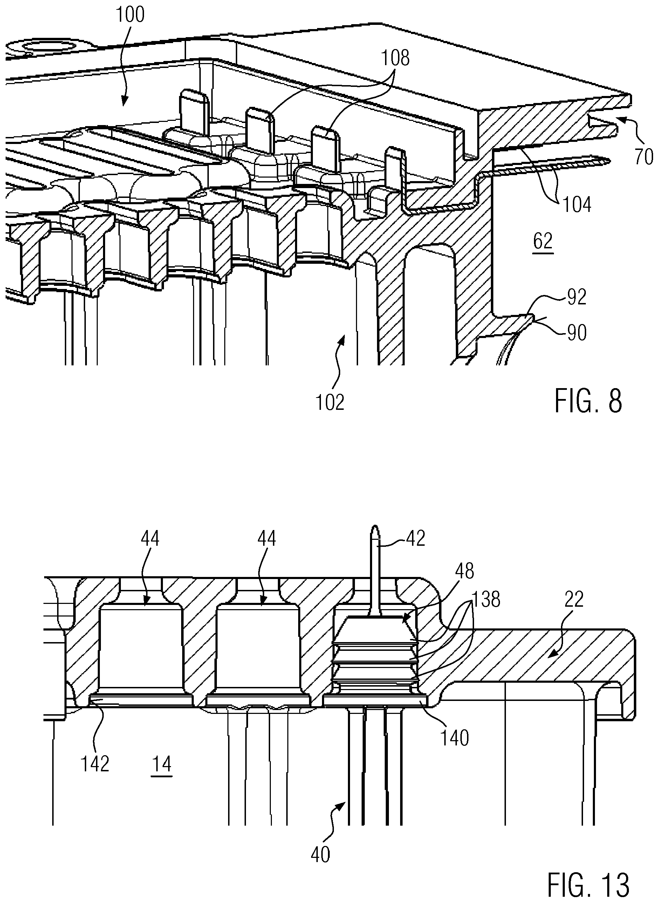

Die Figur 8 verdeutlicht eine Stromschiene 104, die als elektrische Leitungsbahn zwischen der Anschlusskammer 56 und der Steuerkammer 62 vorgesehen ist. Auf Höhe des Steuerkammerbodens 64 und innerhalb desselben ist die Stromschiene 104 zweifach gegenläufig um 90° umbogen. Ein innerhalb der Steuerkammer 62 befindliches Ende der Stromschiene 104 ist als Steckanschuss für eine innerhalb der Steuerkammer vorgesehene bestückte Leiterplatte 106 ausgebildet (vgl. Figur 6). Das andere Ende ist innerhalb der Anschlusskammer als Anschlusszunge 108 für eine innerhalb der Anschlusskammer vorgesehene und in den vorherigen Figuren weggelassene Verteilerplatte vorgesehen. Die Verteilerplatte kann gemäß EP 2 505 931 A1 ausgebildet sein. Durch mehrere hintereinander in identischer Weise vorgesehene Stromschienen 104 liegen mehrere Anschlusszungen 108 innerhalb der Anschlusskammer 56 frei. Die Anschlusszungen 108 erstrecken sich parallel zu den Kontaktzungen 42 zu den PTC-Heizelementen. So kann die Verteilerplatte zur Kontaktierung mit sämtlichen Kontakt- bzw. Anschlusszungen 42, 108 in die Anschlusskammer von oben eingesenkt werden.

### 4. Abschirmung

Die Blechstreifen 128 sind aus stanzbearbeiteten Blechen gebildet und stellen Ausführungsbeispiele für Kontaktbleche dar.

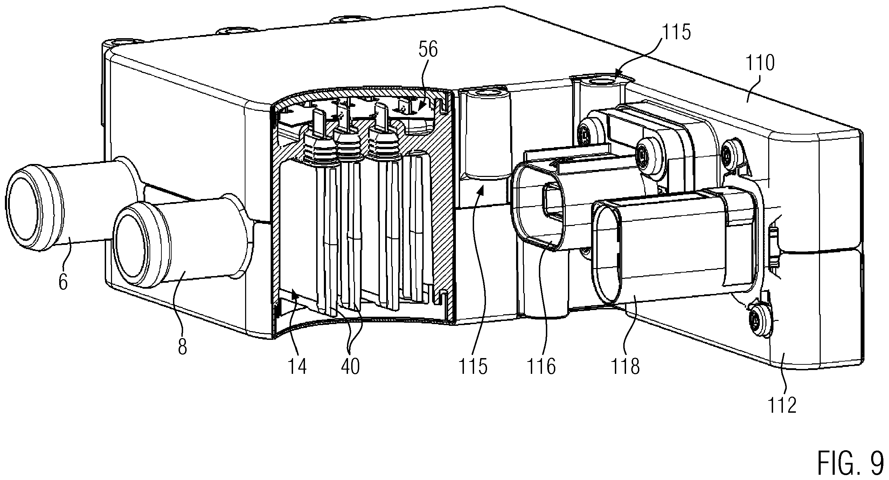

Die Figur 9 zeigt eine teilweise geschnittene Darstellung des zuvor beschriebenen Gehäuses 2. Dieses Kunststoffgehäuse 2 wird durch zwei Metallschalen 110, 112 umgeben, die eine Abschirmung der elektrischen Heizvorrichtung ausbilden, so dass elektromagnetische Strahlen nicht von dieser abgesetzt werden können. Die Teilungsebene der Metallschalen 110, 112 befindet sich in etwa auf mittlerer Höhe der beiden Stutzen 6, 8. Die Metallschalen 110, 112 umgeben das Gehäuse 2 im Wesentlichen vollumfänglich. Lediglich an dem Kunststoffgehäuse 2 ausgebildete Befestigungsvorsprünge 114 ragen durch an den Metallschalen 110, 112 ausgebildete Ausnehmungen 115 über die Metallschalen 110, 112 und die dadurch gebildete Abschirmung nach außen vor. Des Weiteren überragen mit Bezugszeichen 116 bzw. 118 gekennzeichnete Steckergehäuse, wobei das Steckergehäuse 116 für den vorliegend hochvoltigen Leistungsstrom und das Steckergehäuse 118 für die mit niedriger Voltage betriebenen Steuerleitungen vorgesehen ist. Die in Figur 9 gezeigte Ausführung erlaubt die Befestigung des Gehäuses 2 über die aus Kunststoff gebildeten Befestigungselemente 110. Mit diesem kann auf einfache Weise dem Erfordernis entsprochen werden, das Gehäuse 2 an der gewünschten Stelle innerhalb eines Kraftfahrzeuges zu befestigen. In Figur 9 sind die Metallschalen 110, 112 im Wesentlichen durchgehend ausgebildet. Sie können ebenso gut aus einem Lochblech gebildet sein, ohne dass die Wirkung der Metallschalen 110, 112 als EMV-Schutz verlorenginge.

### 5. PTC-Heizelement als Rahmenelement

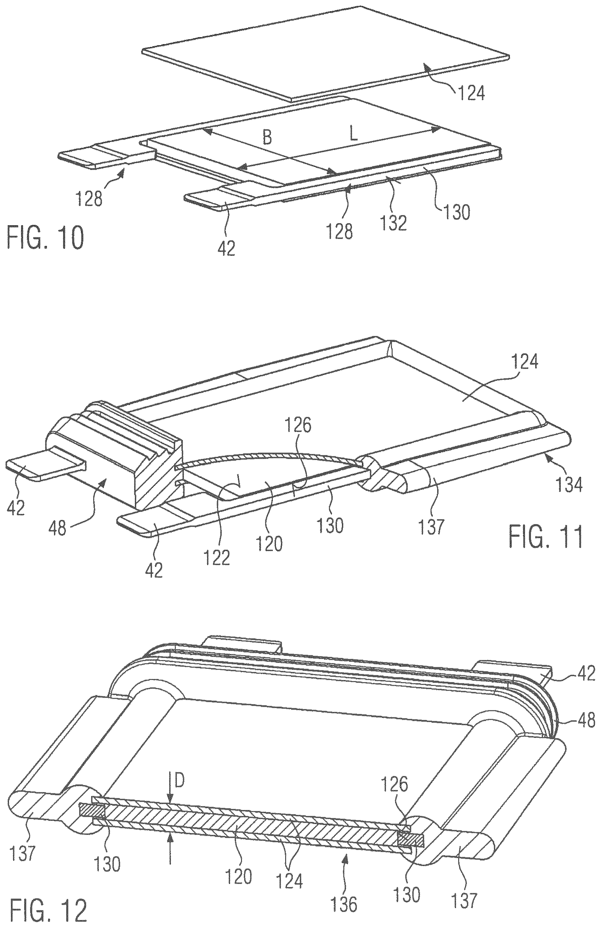

In Figur 10 ist ein PTC-Element 120 gezeigt, welches an seinen aneinander gegenüberliegenden Hauptseitenflächen 122 mit einer Isolierlage 124 belegt ist. Die Isolierlage 124 ist vorliegend eine Keramikplatte aus Aluminiumoxid. Sie kann aber auch als Beschichtung auf das PTC-Element 120 aufgebracht sein oder als Kombination einer Beschichtung mit einer ein- bzw. mehrschichtigen Isolierschicht verwirklicht sein. Das PTC-Element 120 ist als Plättchen ausgebildet mit einer Breite B bzw. einer Länge L, die um den Faktor von zumindest 10 größer sind, als die Dicke D, die dem Abstand der beiden Hauptseitenflächen 122 entspricht. Sich im Wesentlichen in Richtung der Länge L erstreckend sind an sich gegenüberliegenden Stirnseitenflächen 126 jeweils Blechstreifen 128 vorgesehen, die mit dem PTC-Element 120 verklebt und elektrisch leitend an einer oberflächigen Metallierung des PTC-Elements 128, die als Schutz mittels PVD oder CVD aufgebracht sein kann, angebunden sind. Diese Blechstreifen bilden jeweils Leiterbahnen zu unterschiedlichen Polaritäten aus, mit denen das PTC-Element 120 bestromt wird. Die Blechstreifen 12 bestehen aus einem Kontaktsteg 130, der relativ schmal ist, und der gegenüber dem Kontaktsteg 130 in Richtung der Breite B verbreiterten Kontaktzunge 42.

Die Kontaktstege 130 bilden vorliegend die Elektroden zu dem PTC-Element aus und sind mit der Metallisierung des PTC-Elements 120 elektrisch verbunden. Die Dicke der Kontaktzunge 42 ist geringer als die Dicke des Kontaktsteges 30. Dessen Dicke ist wiederum geringer als die Dicke D des PTC-Elementes. Der Blechstreifen 128 ist so vorgesehen, dass dieser an keiner Stelle die Hauptseitenflächen 122 des PTC-Elementes 120 überragt. Wie die Figuren 11 und insbesondere 12 erkennen lassen, ragen die Isolierlagen 124 seitlich über das PTC-Element 120 hinaus. Die Isolierlagen 124 haben demensprechend eine Grundfläche, die größer als die Grundfläche der Hauptseitenflächen 122 des PTC-Elementes 120 ist. Dementsprechend nehmen die äußeren Ränder der Isolierlagen 124 beidseitig den Kontaktsteg 130 zwischen sich auf (vgl. Figur 12). Jeder Kontaktsteg 130 ist mit einer der gegenüberliegenden Stirnseitenflächen 126 verklebt. Die Isolierlage 124 ist ebenfalls mit dem PTC-Element 120 verklebt. Die Isolierlage 124 liegt unmittelbar auf dem PTC-Element auf. So kontaktiert eine der Isolierlagen 124 die zugehörige Hauptseitenfläche 122 des PTC-Elementes unmittelbar.

Die Außenseite der jeweiligen Blechstreifen 128 ist vollkommen eben und erstreckt sich streng in Richtung der Länge L. Die Kontaktzungen 42 sind in Breitenrichtung größer als der Kontaktsteg 130 ausgebildet und überragen das PTC-Element 120 aufeinander zu (vgl. Figur 10). Die Kontaktzunge 42 ist auch dünner als der Kontaktsteg 130.

Der gegenüber dem Kontaktsteg 130 verbreiterte Bereich des Blechstreifens 128 ist in einem Heizelementgehäuse 134 aufgenommen, welches rahmenförmig das PTC-Element 120 umgibt. Dieser Kunststoffrahmen 134 schließt die umlaufenden Ränder der Isolierlagen 124 ein. Auch die Randflächen 132 sind von dem den Kunststoffrahmen 134 bildenden Material eingesiegelt. Der Kunststoffrahmen 134 ist durch Umspritzen eines Elastomermaterials als elastomerer Kunststoffrahmen 134 ausgebildet. Bei dem fertigen PTC-Heizelement 40 überragen lediglich die Kontaktzungen 42 an einer Stirnseite den Kunststoffrahmen 134. Alle anderen funktionalen und für die Wärmeerzeugung und Stromführung dienenden Teile des PTC-Heizelementes 40 sind innerhalb des Kunststoffrahmens 134 aufgenommen. Wie insbesondere Figur 12 verdeutlicht, liegt das PTC-Element 120 mit seinen gegenüberliegenden Hauptseitenflächen 122 hinter mit Bezugszeichen 136 gekennzeichneten und durch den Kunststoffrahmen 134 gebildeten Rahmenöffnungen. Diese Rahmenöffnungen 136 werden bedeckt durch die Isolierlage 124. Vorliegend ergibt sich nahezu überhaupt keine Überdeckung des Kunststoffrahmens 134 mit den Hauptseitenflächen 122 des PTC-Elementes, so dass dieses zu annähernd 100% seiner Hauptseitenflächen 122 hinter den Rahmenöffnungen 136 freiliegt.

Die rechtwinklig von dem Dichtkragen 48 abragenden Rahmenholme des Kunststoffrahmens 134 sind jeweils mit randseitigen Anlagenstegen 137 versehen. Die Anlagestege 137 sind nach Art von verjüngten Lamellen ausgebildet, die eine gegenüber der Dicke des Kunststoffrahmens 134 verjüngte Dicke haben. Wie sich beispielsweise auf Figur 6 entnehmen lässt, sind die PTC-Heizelement 40 jeweils hintereinander leicht versetzt vorgesehen, so dass jedes erste PTC-Heizelement 40 an der linken Seite an einer Wandung des Gehäuses 2 anliegt und dort über den dichtend gegen eine Begrenzungswand der Zirkulationskammer 14 anliegenden Anlagesteg 137 abgedichtet sind. So kann auf dieser Seite kein Fluid an dem PTC-Element 40 vorbeiströmen, wohl aber an dem in Strömungsrichtung davor bzw. dahinter liegenden PTC-Heizelement. Dieses wiederum liegt mit seinem Anlagesteg 137 an der gegenüber liegenden Seite an der die Zirkulationskammer 14 begrenzten Wandung an und verlegt dort den Strömungskanal. So wird durch alternierendes Anordnen der PTC-Heizelemente 40 ein mäandrierender Strömungskanal ausgebildet.

### 6. Steckverbindung

Der Kunststoffrahmen 134 bildet ferner den zuvor bereits beschriebenen Dichtkragen 48 aus, der mit zu dem freien Ende der Kontaktzungen 42 konisch zulaufenden Segmenten 138 versehen ist (vgl. Figur 13). Vorliegend sind drei dieser Segmente 138 in Längserstreckungsrichtung der Kontaktzunge 42 hintereinander vorgesehen. Zwischen der Rahmenöffnung 136 und diesen Segmenten 138 ist ein ringförmiger Anschlag 140 durch das Heizelementgehäuse 134 ausgebildet. Wie Figur 13 verdeutlicht, liegt dieser Anschlag dichtend gegen eine zylindrische und durch die weibliche Steckelementaufnahme 44 gebildete Gegenfläche 142 an.

Wie die Figuren 2 und 5 verdeutlichen, liegt die gegenüberliegende Seite der PTC-Elemente 40 nach dem Einbau an dem Boden 18 des Gehäuses 2 an. Zur genauen Positionierung sind in dem Boden 18 Vertiefungen 144 vorgesehen, in welchen die Stirnseitenflächen des Heizelementgehäuses 134 aufgenommen sind. Dadurch wird eine exakt rechtwinklige Positionierung der PTC-Heizelemente 40 relativ zu der Trennwand 54 gewährleistet. Des Weiteren wird eine Haltekraft erzeugt, die verhindert, dass die in der Trennwand 54 steckverbundenen PTC-Heizelemente 40 beim Betrieb und insbesondere aufgrund der Vibration des Fahrzeuges aus den weiblichen Steckelementaufnahmen 44 herausfallen können. Diese bodenseitige Anlage der PTC-Heizelemente 40 sichert auch die Anpresskraft innerhalb der Steckkontaktierung der PTC-Heizelemente, so dass diese sicher und auch dauerhaft die Längsschlitze 46 zu der Anschlusskammer 56 abdichten.

Es versteht sich von selbst, dass auf die Vertiefungen 144 auch verzichtet werden kann. Ähnlich zu den Anlagestegen 137 kann auch an der dem Dichtkragen 48 gegenüber liegenden Unterseite des Kunststoffrahmens 134 ein Anlagesteg 137 vorgesehen sein, der sich unter elastischer Kompression gegen den Boden 18 des Gehäuses 2 abstützt und dort abdichtet. Hierdurch wird nicht nur eine fluiddichte Abdichtung zwischen der Unterseite des PTC-Heizelementes 40 und dem Gehäuse 2 geschaffen. Vielmehr noch wird durch die Kompression des Anlagesteges auch eine Druckkraft erzeugt, welche das PTC-Heizelement 40 auch dann unverlierbar in der weiblichen Steckelementaufnahme 44 hält, wenn starke Vibrationen auf die elektrische Heizvorrichtung einwirken.

### 7. Elektrischer Anschluss der PTC-Heizelemente

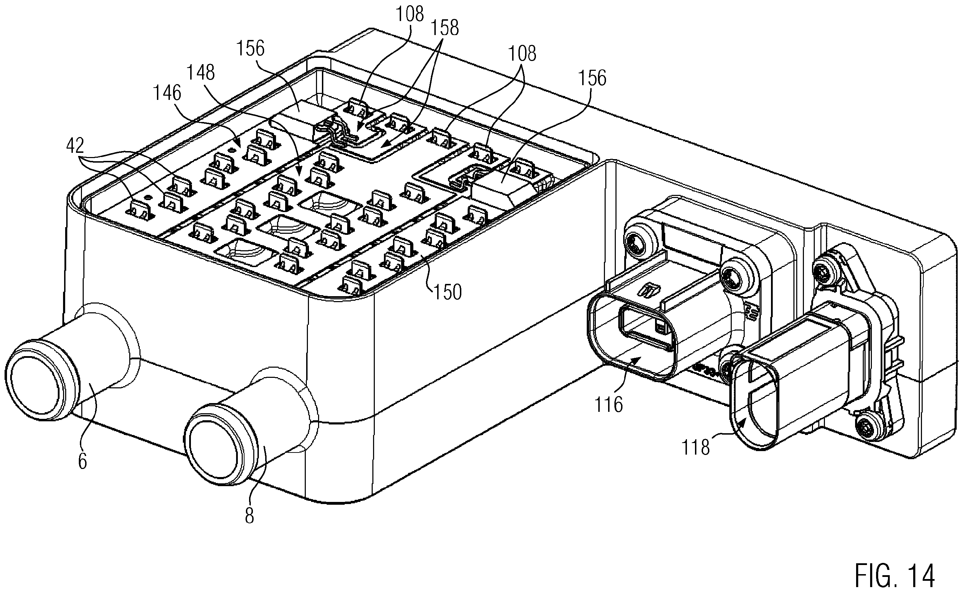

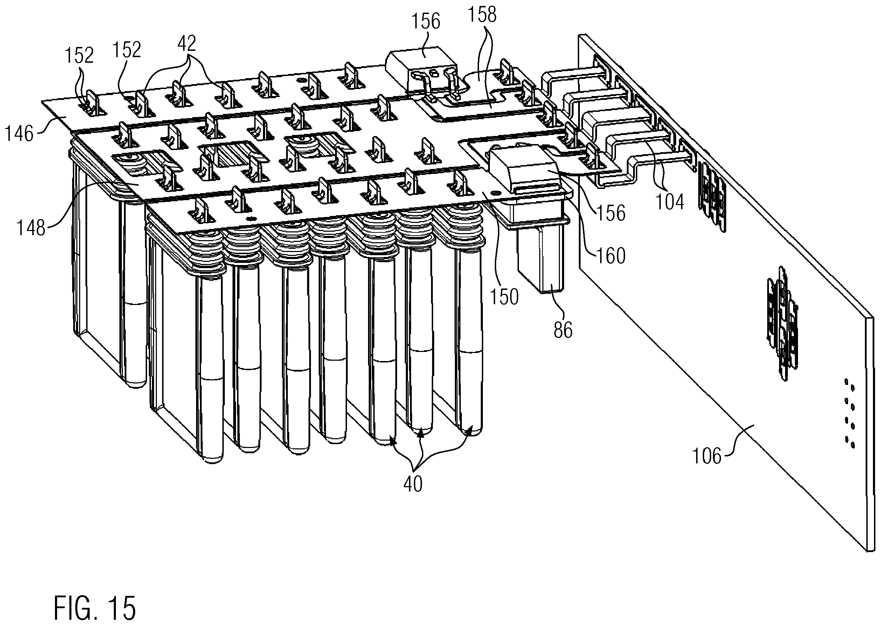

Die Figuren 14-16 verdeutlichen den elektrischen Anschluss der PTC-Heizelemente 40 am Beispiel einer weiteren Ausführungsform. Dabei zeigt Figur 15 das Ausführungsbeispiel ohne das Gehäuse 2 und Teile davon, ähnlich zu der Darstellung in Figur 3. Für den elektrischen Anschluss sind in der Anschlusskammer 56 gestanzte Bleche als Stromschienen 146, 148, 150 vorgesehen, die durch Stanzen und Biegen ausgebildete Kontaktvorsprünge 152 aufweisen, die unter elastischer Vorspannung gegen die Kontaktzungen 42 anliegen und diese kontaktieren. Die Kontaktvorsprünge 152 ragen in Aufnahmeöffnungen 154 hinein, die in den Blechstreifen der Stromschienen 146, 148, 150 ausgespart sind. Die mit Bezugszeichen 148 gekennzeichnete Stromschiene hat eine entsprechende Aufnahmeöffnung 154 mit Kontaktvorsprüngen 152 für die Stromschiene 104. Die mit Bezugszeichen 146 bzw. 148 gekennzeichneten Stromschienen sind jeweils mit einem Leistungstransistor 156 bestückt, der elektrisch leitend mit der entsprechenden Stromschiene 146, 150 verbunden und darauf montiert ist. Die Leistungstransistoren 156 sind eingangsseitig mit ebenfalls als Stromschienen ausgebildeten Zuleitern 158 verbunden, die wiederum Aufnahmeöffnungen 154 mit Kontaktvorsprüngen 152 für die Kontaktierung über jeweils eine Stromschien 104 versehen sind. Danach erfolgt die elektrische Leitung innerhalb der Einschlusskammer 56 allein durch Blechelemente. Diese Blechelemente sind ausschließlich mit den Leistungstransistoren 156 als elektrische bzw. elektronische Bauteile bestückt. Es sind keine weiteren elektrischen bzw. elektronischen Bauteile vorgesehen.

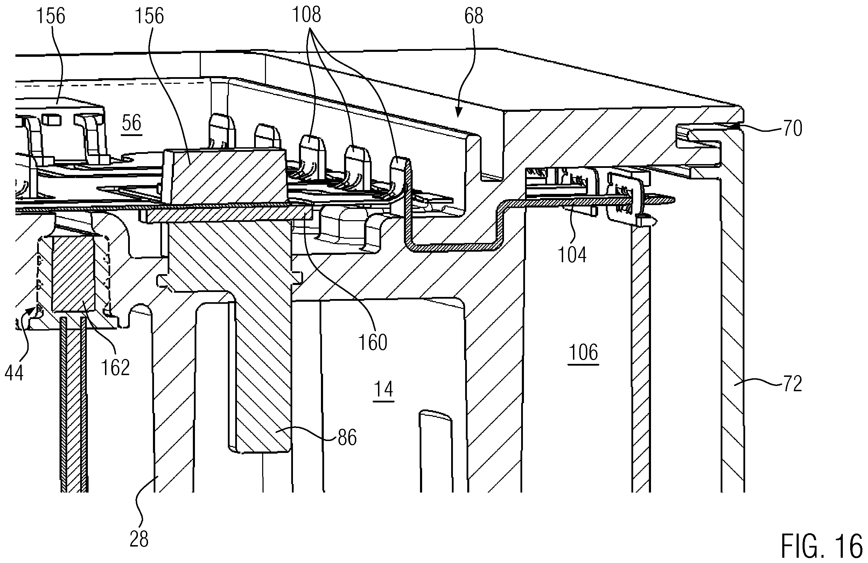

Wie insbesondere Figur 16 verdeutlicht, sind diese Metallplatten 146, 148, 150, 158 elektrisch voneinander isoliert in die Anschlusskammer 56 eingesetzt und dort positioniert. Die auf der Leiterplatte 106 verarbeiteten Steuersignale zum Ansteuern der Leistungstransistoren 146 werden über zumindest einen der Zuleiter 158 dem jeweiligen Leistungstransistor 156 zugeführt.

Die Figur 16 verdeutlicht eine Schnittansicht auf Höhe eines auch in Figur 15 mit Bezugszeichen 86 gekennzeichneten Kühlkörpers. Zwischen dem Kühlkörper 86 und dem Leistungstransistor 156 ist eine elektrische Isolierschicht 160 beispielsweise aus Kapton oder einer Keramikplatte verwirklicht. Die zwischen dieser Isolierschicht 160 und dem Leistungstransistor 156 vorgesehene Stromschiene 146, 150 führt zu einer gewissen Spreizung der von dem Leistungstransistor 156 abgegebenen Wärme. Dazu kann die Stromschiene 146 bzw. 150 zumindest im Bereich des Leistungstransistors 156 mit größerer Dicke ausgebildet sein. Ebenso gut ist es möglich, die Stromschiene 146 bzw. 150 aus Kupfer und damit einem gut wärmeleitfähigem Material auszuformen. Das Blechmaterial kann im Bereich des Leistungstransistors 156 durch Konturwalzen eine erhöhte Dicke aufweist.

Die Stromschienen 146, 148, 150, 158 können durch Stanzbearbeitung mit einer Crimplasche oder dergleichen versehen sein, die mit dem Gehäuse 2 in Wechselwirkung tritt, um die jeweilige Stromschiene 146, 148, 150, 158 an dem Gehäuse 2 befestigen und/oder den Leistungstransistor 146 unter Vorspannung gegen den Kühlkörper 86 anzulegen bzw. zu drücken.

Die Figur 16 lässt auch eine Variante des PTC-Heizelementes 40 erkennen. Danach sind die Kontaktzungen 42 innerhalb des Kunststoffrahmens 134 in einem aus einer harten Kunststoffkomponente gebildeten Befestigungsstopfen 162 aufgenommen. Die Kontaktzungen 42 sind durch Umspritzen in dem Befestigungsstopfen 162 aufgenommen. Der Befestigungsstopfen 162 besteht aus einem harten Kunststoff mit guten Kriechstrom- und Durchschlagsfestigkeit. Der Befestigungsstopfen 162 bildet einen harten Kern für das durch das PTC-Heizelement 40 gebildete männliche Steckelement. Dieser Befestigungsstopfen 162 ist lediglich durch einen dünnen Überzug aus dem weichelastischen Material des Dichtkragens 48 überzogen, wodurch die durch den Dichtkragen 48 gebildete Kompressionskraft innerhalb der weiblichen Steckelementaufnahme 44 gesteigert wird. Der Befestigungsstopfen 162 kann beispielsweise durch Umspritzen von zwei Blechstreifen 128 erfolgen, die jeweils für sich die Kontaktstege 130 und die Kontaktzungen 42 als einteiliges Bauteil ausformen. In dieser Weise vorbereitet und räumlich-körperlich relativ zueinander positioniert kann der Befestigungsstopfen 162 zusammen mit dem Blechstreifen 128 wie zuvor beschrieben mit der weichelastischen Kunststoffkomponente zur Ausbildung des Kunststoffrahmen 134 überspritzt werden.

Auch bei der Variante nach den Figuren 14-16 ist der Dichtkragen länglich ausgebildet. Es versteht sich aber von selbst, dass jede einzelne Kontaktzunge 42 in einem zylindrischen Dichtkragen mit im Grunde kreisrunder oder ovaler Querschnittsfläche angeordnet sein kann. Die weibliche Steckelementaufnahme 44 ist dann ebenfalls mit kreisrundem bzw. ovalem Querschnitt versehen. Eine solche Ausgestaltung kann die Dichtigkeit gegenüber dem konkret beschriebenen Ausführungsbeispiel erhöhen. Es versteht sich von selbst, dass auch polygonale Querschnittsflächen möglich sind.

Figur 16 lässt ferner die Befestigung des Kühlkörpers 86 innerhalb der Trennwand 54 erkennen. Der Kühlkörper 86 hat auf Höhe der Trennwand 54 an seinem Außenumfang einen den Kühlkörper 86 randseitig überragenden Befestigungskragen 164, der durch Umspritzen des die Trenne 54 bildenden Kunststoffmaterials formschlüssig eingesiegelt ist. Die Ausgestaltung des Befestigungskragens 164 verbessert im Übrigen die Dichtigkeit zwischen der Zirkulationskammer 14 und der Anschlusskammer 56.

Gemäß einer nicht dargestellten Variante kann die zu der Anschlusskammer 56 ragende Oberfläche des Kühlkörpers 86 auch von dem die Trennwand 54 ausbildenden Kunststoffmaterial überzogen sein. Beim Überspritzen des Kühlkörpers 46 kann ein dünner Film mittels Spritzgießen zwischen der Oberfläche des Kühlkörpers 86 und dem Innenraum der Anschlusskammer 56 ausgebildet sein, über welchen der Leistungstransistor 156 an dem Kühlkörper 68 elektrisch isoliert anliegt. Hierdurch wird die Fertigung weiter vereinfacht. Eine separate elektrische Isolierlage muss nicht zwischen dem Leistungstransistor 156 und dem Kühlkörper 86 vorgesehen werden.

### Bezugszeichenliste

- 2: Gehäuse
- 4: Gehäusewannenelement
- 6: Einlassstutzen
- 8: Auslassstutzen
- 10: Einlassöffnung
- 12: Auslassöffnung
- 14: Zirkulationskammer
- 16: Heizkammer
- 18: Boden
- 20: Teilungswand
- 22: Abdeckplatte
- 24: Teilungswand
- 26: Verbindungskanal
- 28: Kanalwandsegment
- 30: Kanalwandsegment
- 32: Rand
- 34: Nut
- 40: PTC-Heizelement
- 42: Kontaktzunge
- 44: weibliche Steckelementaufnahme
- 46: Längsschlitz
- 48: Dichtkragen
- 50: Gehäusebasisteil
- 52: Wandung
- 54: Trennwand
- 56: Anschlusskammer
- 58: Wandung
- 60: Wandung
- 62: Steuerkammer
- 64: Steuerkammerboden
- 66: Nut der Zirkulationskammer 14
- 68: Nut der Anschlusskammer 56
- 70: Nut der Steuerkammer 62
- 72: Abdeckelement zu der Steuerkammer 62
- 74: Kranz
- 76: Gegennut
- 78: innerer Steg
- 80: Gehäusedeckel zu der Zirkulationskammer
- 82: Gehäusedeckel zu der Anschlusskammer
- 84: Durchgangsöffnung
- 86: Kühlkörper
- 88: Dichtring
- 90: Anschlag
- 92: Kragen
- 94: Verriegelungsvorsprung
- 96: Verriegelungsnase
- 98: Steuerwanne
- 100: Anschlusswanne
- 102: Zirkulationswanne
- 104: Stromschiene
- 106: Leiterplatte
- 108: Anschlusszunge
- 110: Metallschale
- 112: Metallschale
- 114: Befestigungsvorsprung
- 115: Ausnehmung
- 116: Steckergehäuse Hochvolt
- 118: Steckergehäuse Niedrigvolt
- 120: PTC-Element
- 122: Hauptseitenfläche
- 124: Isolierlage
- 126: Stirnseitenfläche
- 128: Blechstreifen
- 130: Kontaktsteg
- 132: Randfläche
- 134: Heizelementgehäuse/Kunststoffrahmen
- 136: Rahmenöffnung
- 137: Anlagesteg
- 138: Segment
- 140: Anschlag
- 142: Gegenfläche
- 144: Vertiefung
- 146: Stromschiene
- 148: Stromschiene
- 150: Stromschiene
- 152: Kontaktvorsprung
- 154: Aufnahmeöffnung
- 156: Leistungstransistor
- 158: Zuleiter
- 160: Isolierschicht
- 162: Befestigungstopfen
- 164: Befestigungskragen
- B: Breite des PTC-Elementes
- L: Länge des PTC-Elementes
- D: Dicke des PTC-Elementes

## Patentansprüche

1. Elektrische Heizvorrichtung mit einem Gehäuse (2), das Ein- und Auslassöffnungen (10; 12) für das zu erwärmende Fluid und eine Zirkulationskammer (14) und eine von der Zirkulationskammer (14) durch eine Trennwand getrennte Anschlusskammer (56) ausbildet, wobei in der Zirkulationskammer (14) eine wärmeabgebende Fläche eines PTC-Heizelementes (40) freiliegt, die wärmeleitend mit einem PTC-Element gekoppelt (120) ist, das mit elektrischen Leiterbahnen (128) zu unterschiedlichen Polaritäten elektrisch leitend kontaktiert ist, die in der Anschlusskammer (56) elektrisch angeschlossen sind, **dadurch gekennzeichnet, dass** das Gehäuse (2) ein Kunststoffgehäuse (50, 72, 80, 82) mit einer Abschirmung (110, 112) versehen ist, die das Kunststoffgehäuse (50, 72, 80, 82) im Wesentlichen vollumfänglich umschließt.

2. Elektrische Heizvorrichtung nach Anspruch 1, **dadurch gekennzeichnet, dass** das Gehäuse (2) eine Steuervorrichtung (106) in sich aufnimmt, die von der Abschirmung (110, 112) umfänglich umgeben ist.

3. Elektrische Heizvorrichtung nach einem der vorherigen Ansprüche, **gekennzeichnet durch** eine durch das Kunststoffgehäuse (50, 72, 80, 82) ausgebildete Steuerkammer (62), in der eine Steuervorrichtung (106) aufgenommen ist.

4. Elektrische Heizvorrichtung nach einem der vorherigen Ansprüche, **gekennzeichnet durch** wenigstens eine, eine Wand (64) des Kunststoffgehäuses (50, 72, 80, 82) durchsetzende Stromschiene (104), die durch Umspritzen dichtend in der Wand (64) aufgenommen ist, wobei das Kunststoffgehäuse (50, 72, 80, 82) aus einem Duroplasten gebildet ist.

5. Elektrische Heizvorrichtung nach einem der vorherigen Ansprüche, **dadurch gekennzeichnet, dass** die Abschirmung durch ein das Kunststoffgehäuse (50, 72, 80, 82) außenseitig umgebendes Metallgehäuse aus zumindest zwei Schalenelementen (110, 112) gebildet ist, die zwischen sich die Ein- und Auslassöffnungen (10; 12) ausbildende Ein- und Auslassstutzen (6; 8) des Gehäuses aufnehmen.

6. Elektrische Heizvorrichtung nach Anspruch 5, **dadurch gekennzeichnet, dass** das Metallgehäuse (110, 112) Ausnehmungen (115) aufweist, durch welche durch das Kunststoffgehäuse (50, 72, 80, 82) gebildete Befestigungsvorsprünge (114) die Außenfläche des Metallgehäuses (110, 112) überragen.

7. Elektrische Heizvorrichtung nach einem der vorherigen Ansprüche, **dadurch gekennzeichnet, dass** das Kunststoffgehäuse (50, 72, 80, 82) aus einem Duroplast gebildet ist.

## Claims

1. Electric heating device with a casing (2) that forms inlet and outlet openings (10; 12) for the fluid to be heated and a circulation chamber (14) as well as a connection chamber (56) separated from said circulation chamber (14) by way of a partition wall, where a heat-emitting surface of a PTC heating element (40) is exposed in said circulation chamber (14) and is coupled in a heat-conductive manner to said PTC element (120) which is in electrically conductive contact via electrical conductor tracks (128) with different polarities that are electrically connected in said connection chamber (56) **characterized in that** said casing (2) is a plastic casing (50, 72, 80, 82) provided with a shielding (110, 112), which shielding (110, 112) encloses the casing substantially entirely circumferentially.

2. Electric heating device according to claim 1, **characterized in that** said casing (2) accommodates a control device (106) which is circumferentially surrounded by said shielding (110, 112).

3. Electric heating device according to one of the preceding claims, **characterized by** a control chamber (62) formed by said plastic casing (50, 72, 80, 82) in which a control device (106) is accommodated.

4. Electric heating device according to one of the preceding claims, **characterized by** at least one current bar (104) penetrating a wall (64) of said plastic casing (50, 72, 80, 82) and accommodated in said wall (64) in sealing manner by way of overmolding, where said plastic casing (50, 72, 80, 82) is formed from duroplastic material.

5. Electric heating device according to one of the preceding claims, **characterized in that** the shielding is formed by a metal casing outwardly surrounding said plastic casing (50, 72, 80, 82) and being formed from at least two shell elements (110, 112) which receive therebetween inlet and outlet ports (6; 8) of said casing which form said inlet and outlet openings (10; 12).

6. Electric heating device according to claim 5, **characterized in that** said metal casing (110, 112) comprises recesses (115) through which attachment projections (114) formed by said plastic casing (50, 72, 80, 82) project over the outer surface of said metal casing (110, 112).

7. Electric heating device according to one of the preceding claims, **characterized in that** said plastic casing (50, 72, 80, 82) is formed from duroplastic material.

## Revendications

1. Dispositif de chauffage électrique comprenant un boitier (2), qui forme des ouvertures d'entrée et de sortie (10; 12) pour le fluide à échauffer, et une chambre de circulation (14) ainsi qu'un compartiment de raccordement (56) séparé de la chambre de circulation (14) par une cloison de séparation, dispositif dans lequel une surface délivrant de la chaleur, d'un élément chauffant PTC (40), est librement dégagée dans la chambre de circulation (14) et est couplée en transmission de chaleur avec un élément PTC (120) contacté de manière électriquement conductrice, à l'aide de pistes conductrices électriques (128), à des polarités différentes, qui sont raccordées électriquement dans le compartiment de raccordement (56),
**caractérisé en ce que** le boitier (2) est un boitier de matière plastique (50, 72, 80, 82) muni d'un blindage (110, 112), qui entoure le boitier de matière plastique (50, 72, 80, 82) sensiblement sur la totalité de sa périphérie.

2. Dispositif de chauffage électrique selon la revendication 1, **caractérisé en ce que** le boitier (2) accueille un dispositif de commande (106), qui est entouré par le blindage (110, 112) sur la totalité de sa périphérie.

3. Dispositif de chauffage électrique selon l'une des revendications précédentes, **caractérisé par** un compartiment de commande (62) formé par le boitier de matière plastique (50, 72, 80, 82) et dans lequel est logé un dispositif de commande (106).

4. Dispositif de chauffage électrique selon l'une des revendications précédentes, **caractérisé par** au moins un rail de distribution de courant (104), qui traverse une paroi (64) du boitier de matière plastique (50, 72, 80, 82), et est reçu de manière étanche dans la paroi (64) en étant surmoulé par injection, le boitier de matière plastique (50, 72, 80, 82) étant réalisé en une matière plastique thermodurcissable.

5. Dispositif de chauffage électrique selon l'une des revendications précédentes, **caractérisé en ce que** le blindage est réalisé par un boitier métallique, qui entoure le boitier de matière plastique (50, 72, 80, 82) par l'extérieur et est formé par au moins deux éléments de coque (110, 112), qui reçoivent entre eux des embouts d'entrée et de sortie (6; 8) formant les ouvertures d'entrée et de sortie (10; 12).

6. Dispositif de chauffage électrique selon la revendication 5, **caractérisé en ce que** le boitier métallique (110, 112) présente des évidements (115) à travers lesquels font saillie de la surface extérieure du boitier métallique (110, 112), des protubérances de fixation (114) formées par le boitier de matière plastique (50, 72, 80, 82).

7. Dispositif de chauffage électrique selon l'une des revendications précédentes, **caractérisé en ce que** le boitier de matière plastique (50, 72, 80, 82) est réalisé en une matière plastique thermodurcissable.
